# EUROPÄISCHE PATENTSCHRIFT

(11) **EP 2 565 023 B1**
(45) Veröffentlichungstag und Bekanntmachung des Hinweises auf die Patenterteilung: **14.05.2014**
(21) Anmeldenummer: 11179547.2
(22) Anmeldetag: 31.08.2011
(51) Int. Cl.: B29D 30/16, B29D 30/30, B29D 30/14, B29C 70/38

(54) **Fadenverlegevorrichtung**
thread laying device
dispositif de pose de fils

(43) Veröffentlichungstag der Anmeldung: 06.03.2013
(73) Patentinhaber: SSM Schärer Schweiter Mettler AG, 8812 Horgen (CH)
(72) Erfinder: Wandeler, André, 8833 Samstagern (CH); Maccabruni Davide, 8800 Thalwil (CH); Muser, Christian, 8833 Samstagern (CH)
(74) Vertreter: Kohler Schmid Möbus

(56) Entgegenhaltungen:
- US-A- 3 250 493
- US-A- 3 945 578
- US-A- 4 772 352
- US-A- 4 909 880
- US-A- 5 518 564
- US-A1- 2005 067 731
- US-A1- 2007 079 921

## Beschreibung

Die Erfindung betrifft eine Fadenverlegevorrichtung zum Verlegen eines Fadens auf einem Wickelkörper.

Bei der Fertigung von Strukturbauteilen werden aufgrund ihrer hohen spezifischen Steifigkeiten und Festigkeiten zunehmend faserverstärkte Verbundmaterialien eingesetzt. Ein dabei häufig zur Anwendung kommendes Fertigungsverfahren ist das sogenannte Faserwickelverfahren, bei dem Endlosfäden mittels eines gegenüber dem Wickelkörper bewegbar angeordneten Fadenführers straff und in der Regel eng aneinander liegend auf einem als Urform dienenden Wickelkörper verlegt werden, um ein Faserhalbzeug mit definierter Formgebung zu bilden. Die Fäden bzw. Fasern werden üblicherweise in mehreren Schichten übereinanderliegend angeordnet, wobei jeweils vorgegebene Faserverlaufsrichtungen der einzelnen Schichten im Hinblick auf Lastachsen des späteren Bauteils ausgerichtet werden. Beispielsweise weisen Reifenkarkassen derartige Schichten auf.

Die beim Faserwickelverfahren eingesetzten Fäden werden in einer speziellen Kunststoffmatrix eingebettet, in der die Fasern durch Kohäsions- und Adhäsivkräfte an die Kunststoffmatrix gebunden sind. Die Fäden können diesbezüglich mit einem entsprechenden thermoplastischen oder duroplastischen Kunststoff imprägniert (sog. Prepregs) sein oder das fertiggestellte Faserhalbzeug wird mit einem zur Bildung der Kunststoffmatrix vorgesehenen flüssigen Kunststoff getränkt. Der Kunststoff wird zum Ausbilden der Matrix in einem separaten Fertigungsschritt gehärtet. Der Wickelkörper wird erneut eingesetzt oder wird aufgelöst bzw. verbleibt im Sinne einer verlorenen Form in dem späteren Bauteil.

Aus der EP 1 792 751 A2 ist eine Fadenverlegevorrichtung mit einem bidirektional arbeitenden Fadenführer gezeigt, der am Fadenauslass seines Fadenführerkopfs zwei Fadenführungsrollen mit parallel und starr zueinander angeordneten starren Drehachsen aufweist. Der Faden ist zwischen den beiden zum Führen und Andrücken des Fadens an einen Wickelkörper vorgesehenen Fadenführungsrollen durchgeführt. Der Fadenführerkopf ist um eine zur Längsachse des Fadenführers orthogonal angeordnete Kippachse verkippbar an einem Halteteil des Fadenführers gelagert, so dass in Abhängigkeit von einer Verstellbewegung des Fadenführers, d.h. dessen jeweiliger Bewegungsrichtung, gegenüber dem Wickelkörper jeweils nur eine der Fadenführungsrollen mit dem Wickelkörper in Kontakt gebracht werden kann. Zum Verkippen des Fadenführerkopfs dient ein motorischer Antrieb. Der Faden wird jeweils von der dem Wickelkörper anliegenden Fadenführungsrolle am Wickelkörper festgedrückt. Ein derartiger Fadenführer weist einen komplexen und aufwändigen mechanischen Aufbau auf und ist schwierig zu steuern. Darüber hinaus besteht bei Verlegemustern des Fadens auf dem Wickelkörper, bei denen der Wickelkörper mit höheren Umfangsgeschwindigkeiten unter dem Fadenführer vorbeirotiert wird, die Gefahr, dass der Faden durch den Wickelkörper aus seiner Führung an der jeweiligen Führungsrolle gelöst wird. Auch weist der Fadenführer konstruktionsbedingt eine Vielzahl an unterstützenden Komponenten für die Fadenzuführung auf, was zu einer unerwünschten geschwindigkeitslimitierenden Massenträgheit des Fadenführers führt.

US 5 518 564 A und US 4 772 352 A offenbaren jeweils eine Fadenverlegevorrichtung mit einem Fadenführer zum Verlegen eines Fadens auf einem Wickelkörper. Der Fadenführer umfasst eine um eine Fadenführungsrollendrehachse verdrehbar gelagerte Fadenführungsrolle zum Führen und Andrücken des Fadens gegen den Wickelkörper. Die Fadenführungsrolle ist als Selbstlenkrolle ausgebildet.

US 4 909 880 A zeigt eine Bandverlegevorrichtung zum Aufwickeln eines Bandes auf einem Wickelkörper. Die Bandverlegevorrichtung weist einen tragarmgestützten Verlegekopf mit einer Bandführungsrolle auf, die als Selbstlenkrolle ausgebildet ist. Die Bandführungsrolle liegt während des Wickelprozesses an dem Wickelkörper nicht an.
Eine weitere Fadenverlegungsvorrichtung, bei der der Fadenführer eine als Selbstlenkrolle ausgebildete Fadenführungsrolle aufweist, ist aus der US 2007/0079921 A1 bekannt.

Aufgabe der Erfindung ist es, eine Fadenverlegevorrichtung anzugeben, die gegenüber dem Stand der Technik eine verbesserte Einsatzflexibilität aufweist. Die die Fadenverlegevorrichtung betreffende Aufgabe durch eine Fadenverlegevorrichtung mit den in Patentanspruch 1 angegebenen Merkmalen gelöst.

Der mit der erfindungsgemäßen Fadenverlegevorrichtung verbundene Vorteil besteht im Wesentlichen darin, dass Fäden selbst auf Wickelkörpern mit komplexer dreidimensionaler Geometrie auf einfache und konstruktiv wenig aufwändige Weise verlegt werden können, um so ein Verbundbauteil zu fertigen. Die Kurvenbahn kann dadurch, dass die Führungsmittel ein über Umlenkrollen bzw. Umlenkstäbe hin- und herbewegbar geführtes flexibel verformbares Zugmittel umfassen, in weiten Bereichen frei definiert werden, wodurch eine hohe Einsatzflexibilität der Vorrichtung erreicht wird. Die Vorrichtung kann dabei ohne einen nennenswerten konstruktiven oder finanziellen Aufwand auf die jeweiligen Anforderungen, d.h. die Geometrie und die Bemaßung eines mit einem Faden zu belegenden Wickelkörpers, umgestellt werden. Dies bietet insbesondere auch bei der Einzel- bzw. Kleinserienfertigung von faserverstärkten Bauteilen entscheidende Vorteile. Eine konstruktionsseitig an späteren Lastlinien des zu fertigenden Verbundbauteils ausgerichtete Fadenverlaufsrichtung kann in weiten Bereichen auf präzise Weise realisiert werden. Dabei können etablierte Fertigungstechniken mit verlorenen oder wiederverwendbaren Formen, d.h. Wickelkörpern, beibehalten werden. Da der Fadenführer erfindungsgemäß unmittelbar an dem Zugmittel festgelegt (befestigt) ist und gemeinsam mit diesem (auf derselben Kurvenbahn) hin- und herbewegt wird, d.h. gemeinsam mit diesem eine sogenannte Changierbewegung ausführt, weist das Zugmittel vorzugsweise eine möglichst geringe Masse auf, um im Betrieb der Vorrichtung auftretende hohe Beschleunigungen und Verzögerungen des Fadenführers entlang der Kurvenbahn Rechnung zu tragen. Das flexible Zugmittel kann beispielsweise als Seil, Schlauch, Band, Riemen oder auch als Saite ausgebildet sein und im Hinblick auf eine möglichst hohe Standzeit der Fadenverlegevorrichtung aus einem gegenüber im Betrieb auftretenden mechanischen wie auch chemischen Belastungen hoch widerstandsfähigem Material, insbesondere einer Stahllegierung oder auch aus Kohlefasern, gefertigt sein. Derartige Zugmittel sind am Markt vorkonfektioniert erhältlich und entsprechend kostengünstig zu erwerben. Darüber hinaus erlaubt die Vorrichtung, nicht zuletzt aufgrund ihrer einfachen Mechanik, hohe Ausbringungsraten, was insbesondere für die Serienfertigung von Faserhalbzeugen für faserverstärkte Bauteile günstig ist, Insbesondere ist dies bei der Herstellung von tragenden Gerüsten (Karkassen) von Gummireifen vorteilhaft. Ebenfalls können dreidimensionale Wickelkörper, wie Reifen oder Druckbehälter, verstärkt werden. Auch können mit der Vorrichtung unterschiedlichste Fadentypen auf einem Wickelkörper verlegt werden. Neben den zur mechanischen Verstärkung von Bauteilen interessanten Kohle-, Aramid- bzw. und Glasfaserfäden können auch Fäden aus Materialien mit anderen spezifischen Eigenschaften, insbesondere flammhemmende oder elektrisch leitfähige Polymere, eingesetzt werden. Dadurch, dass der Fadenführer über eine Kurvenbahn gegenüber einer Ausgangsorientierung des Fadenführers in einer jeweiligen Raumebene zwischen 7° und 348 ° hin- und her bewegbar ist, wird ein besonders breites Anwendungsspektrum der Fadenverlegevorrichtung ermöglicht. Dadurch lassen sich auch komplexe dreidimensionale Bauteile in einer faserverstärkten Verbundbauweise im Wege des Faden- bzw. Faserwickelverfahrens herstellen.

Der Fadenführer weist eine um eine Fadenführungsrollendrehachse verdrehbar gelagerte Fadenführungsrolle zum Führen und Andrücken des Fadens gegen den Wickelkörper auf, die erfindungsgemäß als Selbstlenkrolle ausgebildet ist. Dadurch wird ein Fadenführer mit konstruktiv besonders einfachem und gegenüber Fehlfunktionen robustem Aufbau zur Verfügung gestellt. Die einzelne Fadenführungsrolle des Fadenführers gewährleistet selbst bei einer hohen Umfangsgeschwindigkeit (Rotationsgeschwindigkeit) des Wickelkörpers ein sicheres und präzises Verlegen des Fadens, da sich die Fadenführungsrolle stets selbststätig entlang einer vorgegebenen Verlegebahn des Fadens auf dem Wickelkörper ausrichtet. Je höher beispielsweise eine Umlaufgeschwindigkeit des Wickelkörpers gegenüber dem Fadenführer ist, desto stärker kann die Selbstlenkrolle um ihre Drehachse ausgelenkt werden. Der Faden kann dadurch stets an der Führungsrolle sicher geführt werden, ohne dass die Gefahr besteht, dass dieser von der Fadenführungsrolle gelöst wird (herunterspringt). Die Fadenführungsrolle kann dabei an ihrer Mantelfläche insbesondere mit einer umlaufenden Kerbe oder Nut zur Aufnahme des Fadens versehen sein. Die Kerbe oder Nut weist vorzugsweise eine auf den zu verlegenden Faden ausgerichtete Kerbtiefe von ungefähr 50% der Fadenstärke auf. Darüber hinaus benötigt der erfindungsgemäße Fadenführer keine komplexe Steuerungs- bzw. Antriebstechnik, da eine Verstellbewegung der als Selbstlenkrolle ausgeführten Fadenführungsrolle allein aus einer Relativbewegung des Wickelkörpers und des Fadenführers ableitbar ist. Stellmotoren zur Verstellung der Fadenführungsrolle sind nicht erforderlich. Insgesamt kann dadurch auch das Gewicht des Fadenführers reduziert werden, was für hohe Beschleunigungen des Fadenführers im Betrieb von Vorteil ist. Die Fadenführungsrolle ist an einem Fadenführerkopf angeordnet, der an einem Halteteil des Fadenführers um eine Drehachse verdrehbar angeordnet ist. Die Fadenführungsrollendrehachse der Fadenführungsrolle ist dabei von der Drehachse des Fadenführerkopfs beabstandet angeordnet. Die Achsen schneiden sich nicht.

Beim Verlegen eines Fadens auf dem Wickelkörper muss der Faden, insbesondere in Bereichen einer Umkehr der Fadenverlaufsrichtung, wie etwa in Randbereichen eines zu fertigenden Faserhalbzeugs, oder auch im Bereich von konkav ausgebildeten Oberflächenabschnitten des Wickelkörpers möglichst mit definiertem Druck an den Wickelkörper gepresst werden, damit der einmal positionierte Faden seine Lage auf dem Wickelkörper beibehält. Diesbezüglich ist der Fadenführerkopf gegenüber dem Halteteil des Fadenführers (zusätzlich) federnd verschiebbar gelagert.

Damit der Faden auch im Bereich der in der Praxis besonders kritischen Umkehrpunkte des Fadenführers entlang der Kurvenbahn präzis auf dem Wickelkörper abgelegt werden kann, ist der Fadenführerkopf vorzugsweise mit einem um seine Schwenkachse wirkenden Drehmoment beaufschlagbar. Dadurch kann der Zeitpunkt der Selbstausrichtung der Fadenführungsrolle, d.h. deren Verschwenkbewegung um die Schwenkachse, exakt an einem jeweiligen Umkehrpunkt eingeleitet, d.h. provoziert werden. Einer zur neuen Bewegungsrichtung zunächst noch entgegengesetzt ausgerichtete Fadenführungsrolle, bei der der Faden ggf. nicht an der Fadenführungsrolle geführt und von dieser an den Wickelkörper angedrückt würde, kann dadurch sicher vermieden werden.

Das Drehmoment kann erfindungsgemäß pneumatisch oder beispielsweise durch die Kraft eines, beispielsweise zwischen dem Halteteil und dem Fadenführerkopf angeordneten, vorgespannten Federelements bzw. auch motorisch generiert sein.

Der Fadenführer ist als Hohlkörper ausgebildet (rohrförmig) und somit leicht im Gewicht. Schnelle Bewegungen und Bewegungswechsel des erfindungsgemäßen Fadenführers werden begünstigt.

Zwecks einer definierten Querbelastbarkeit des Zugmittels ist dieses vorzugsweise mit einer vorbestimmten Zugspannung beaufschlagt. Dies kann durch geeignete Spannmittel, insbesondere Hydraulikelemente, Federelemente oder aber durch Umlenkrollen bzw. -stäbe mit einer verstell- bzw. verschiebbaren Dreh- bzw. Körperachse, erreicht werden.
Spannungsspitzen des Zugmittels werden vorzugsweise mit geeigneten Dämpfungsmitteln gedämpft.

Vorzugsweise ist zumindest eine Umlenkrolle des Zugmittels motorisch antreibbar. Dadurch kann das Zugmittel mitsamt dem Fadenführer auf konstruktiv einfache Weise hin- und herbewegt werden.

Nach einer Weiterbildung der Erfindung weist die Fadenverlegevorrichtung eine Vorlagenspulenhalterung zum rotierbaren Haltern einer Vorlagenspule mit dem darauf aufgewickelten Faden auf. Die Vorlagenspulenhalterung ist vorzugsweise mit einer Antriebs- und/oder Bremseinheit versehen, um Materialschäden, wie an dünnen, bruchsensiblen Fäden, die durch eine zu hohe Fadenspannung vorkommen können, zu vermeiden.

Ein Fadenverlegesystem mit mehreren vorstehend erläuterten Fadenverlegevorrichtungen erlaubt ein zeitgleiches oder zeitversetztes Verlegen mehrerer Fäden auf einem Wickelkörper oder ein zeitgleiches Verlegen mehrerer Fäden auf unterschiedlichen Wickelkörpern. Dadurch kann ein jeweiliger Fadenverlegeprozess deutlich beschleunigt werden, was insbesondere für den industrielle (Groß-)Serienfertigung von Vorteil ist. Darüber hinaus lassen sich definierte Faden- bzw. Faserschichten, insbesondere solche, die einander überlappen, vereinfacht herstellen. Auch können unterschiedliche Fäden (Titer; Material) an einem Wickelkörper ohne ein aufwändiges Umrüsten der Fadenverlegevorrichtung bzw. eine Unterbrechung des Fadenverlegeprozesses erreicht werden. Geometrische Verhältnisse eines zu erstellenden Wickelkörpers lassen sich erfassen und der Fadenverlauf, auch unregelmäßig, kann eingestellt bzw. vorgegeben werden.

Nachfolgend wird die Erfindung anhand eines in der Zeichnung wiedergegebenen Ausführungsbeispiels näher erläutert.

Die Figuren der Zeichnung zeigen den erfindungsgemäßen Gegenstand stark schematisiert und sind nicht maßstäblich zu verstehen. Die einzelnen Bestandteile des erfindungsgemäßen Gegenstands sind so dargestellt, dass ihr Aufbau gut gezeigt werden kann.

In der Zeichnung zeigen:
- Fign. 1a,b: einen erfindungsgemäßen Fadenführer in perspektivischer Detailansicht (Fig. 1a) und in ausschnittsweiser Vergrößerung (Fig. 1b);
- Fig. 2: eine Fadenverlegevorrichtung mit einem einem Zugmittel und einem daran befestigten Fadenführer gemäß Fig. 1, in Seitenansicht; und
- Fig. 3: eine Prinzipskizze der Fadenverlegevorrichtung aus Fig. 2;

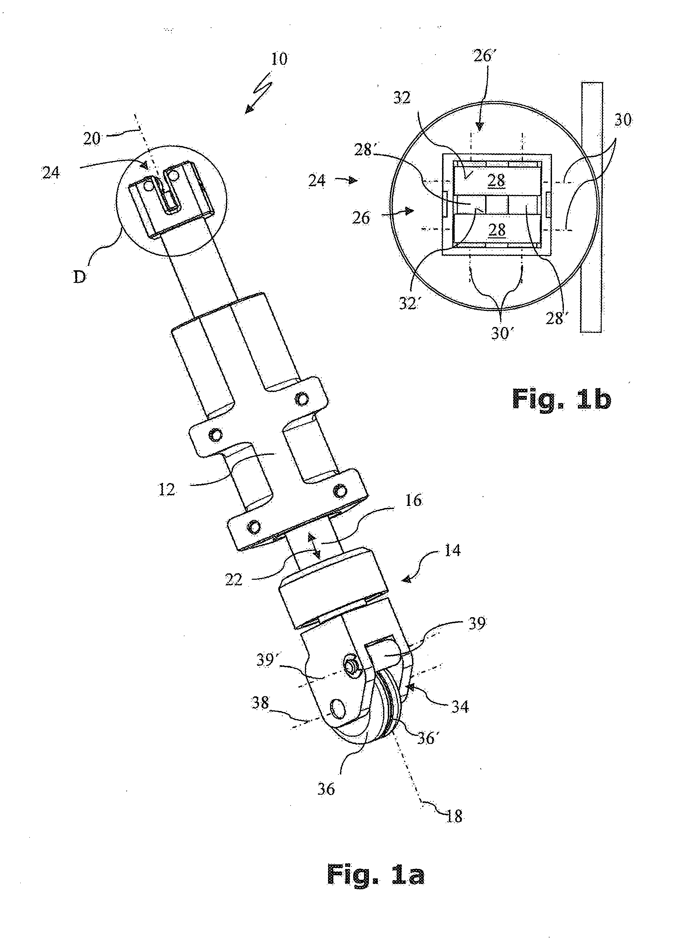

**Fig. 1a** zeigt eine insgesamt mit **10** bezeichneten Fadenführer, wie er bei einem Faserwickelprozess zum Verlegen eines Fadens auf einem Wickelkörper eingesetzt wird. Der Fadenführer 10 weist ein muffenförmiges Halterteil **12** auf, das zur Befestigung des Fadenführers 10 an einem Zugmittel einer Fadenverlegevorrichtung dient. Ein Fadenführerkopf **14** weist ein rohrförmiges und innen hohl ausgeführtes Lagerstück **16** auf, das sich durch das Halteteil 12 hindurch erstreckt und von diesem allseitig umgriffen ist. Der Fadenführerkopf 14 ist mit dem Lagerstück 16 gegenüber dem Halteteil 12 um eine Drehachse **18** verdrehbar am Halteteil 12 gelagert. Die Drehachse 18 des Fadenführerkopfs 14 fällt vorliegend mit einer Längsachse **20** des Fadenführers 10 zusammen. Der Fadenführerkopf 14 ist in seiner hier gezeigten maximalen Ausschubposition gegenüber dem Halteteil 12 durch die Kraft eines nicht näher wiedergegebenen Federelements gehalten und kann entlang der Längsachse 20 in Richtung des mit **22** bezeichneten Pfeils gegenüber dem Halteteil 12 verschoben werden.

Der Fadenführerkopf 14 weist einenends einen Fadeneinlass **24** auf, über den der auf dem Wickelkörper zu verlegende Faden in den Fadenführer 10, d.h. hier in das hohle Lagerstück 16 des Fadenführerkopfes 14, einführbar ist. Der Fadeneinlass 24 ist, wie dies aus dem in **Fig. 1b** vergrößert und in stirnseitiger Draufsicht wiedergegebenem Ausschnitt D des Fadenführers 10 aus Fig. 1a hervorgeht, mit zwei Rollenpaaren **26, 26'** versehen, die in Hauptlaufrichtung des Fadens, d.h. hier in Richtung der Längsachse 20 des Fadenführers 10, hintereinander und voneinander beabstandet angeordnet sind. Rollen **28, 28'** des Rollenpaares 26, 26' weisen jeweils zueinander parallel ausgerichtete Rollendrehachsen **30, 30'** auf, wobei die Rollendrehachsen 30, 30' zueinander orthogonal ausgerichtet sind. Der Faden ist jeweils zwischen den beiden Rollen 28, 28' der einzelnen Rollenpaare 26, 26' hindurchführbar. Die Rollen 28, 28' weisen zur Kontaktierung des üblicherweise mit einem (zur Bildung der Matrix) klebrigen Prozesswerkstoff (z.B. einem Thermoplasten) getränkten bzw. vorimprägnierten Fadens eine Mantelfläche **32, 32'** mit nur geringer Adhäsivität auf, d.h. die eingesetzten Klebstoffe haften an den Rollen 28, 28'nicht oder nur unwesentlich an. Die Mantelflächen 32, 32' können diesbezüglich insbesondere aus PTFE (Polytetrafluorethylen) oder einem anderen geeigneten Werkstoff mit geringer Haft- und Gleitreibung für die eingesetzten Prozesswerkstoffe hergestellt sein.

Wie aus Fig. 1a weiter hervorgeht, weist der Fadenführer 10 anderenends, d.h. an seinem dem Fadeneinlass 24 gegenüberliegenden Ende, ein Fadenauslass 34 auf, durch den der Faden aus dem Fadenführer 10 bzw. hier dem Fadenführerkopf 14 herausführbar ist. Im Bereich des Fadenauslasses **34** ist eine einzelne als Selbstlenkrolle ausgeführte Fadenführungsrolle **36** angeordnet, die zum Führen und zum Andrücken des auf dem Wickelkörper abzulegenden Fadens an den Wickelkörper dient. Die Fadenführungsrolle 36 ist um eine Fadenführungsrollendrehachse **38** gegenüber dem Fadenführerkopf 14 frei verdrehbar gelagert. Die Fadenführungsrollendrehachse 38 ist von der Drehachse 18 des Fadenführerkopfs 14 beabstandet angeordnet und schneidet diese nicht. Der Faden ist beim Fadenverlegeprozess zumindest abschnittsweise um die zum Kontaktieren des Wickelkörpers vorgesehenen Fadenführungsrolle 36 herum und zwischen der Fadenführungsrolle 36 und dem Wickelkörper geführt. Eine Sicherungsrolle **39** dient einer Zwangsführung des aus dem Fadenauslass 34 des Fadenführers 10 herausgeführten Fadens in einer umlaufenden Führungsnut 36' der Fadenführungsrolle 36. Die Sicherungsrolle weist eine zur Fadenführungsrollenddrehachse 38 parallel angeordnete Sicherungsrollendrehachse 39' auf.

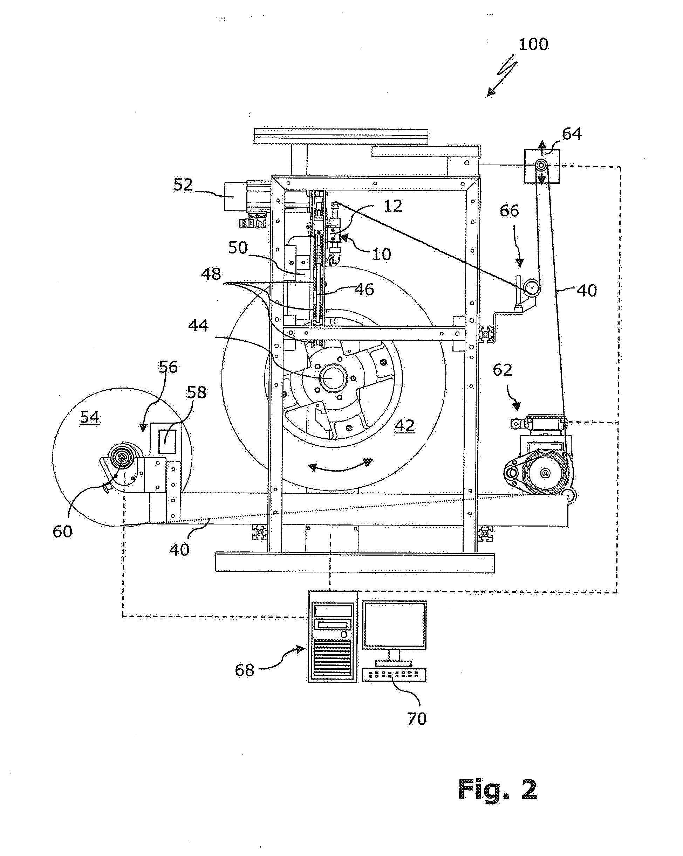

**Fig. 2** zeigt eine Fadenverlegevorrichtung **100** mit einem vorstehend erläuterten Fadenführer 10 zum Verlegen des Fadens **40** auf dem Wickelkörper **42**. Der Wickelkörper 42 dient vorliegend als Urform für die Herstellung einer sogenannten Reifenkarkasse, die im Wesentlichen aus einem mehrschichtigen Gelege des Fadens gebildet ist. Der Wickelkörper 42 ist um eine Rotationsachse 44 motorisch verdrehbar angeordnet.

Die Fadenverlegevorrichtung 10 weist ein hier nur teilweise wiedergegebenes endloses Zugmittel **46** auf, das aus Stahlgewebe gefertigt ist. Das Zugmittel **46** ist um Umlenkrollen **48** geführt und derart an dem Wickelkörper 42 vorbeigeführt, dass dieses Zugmittel 46 im Wesentlichen der Außenkontur des Wickelkörpers 42 folgt. Die Umlenkrollen 48 sind allesamt an einem Rahmenelement **50** der Fadenverlegevorrichtung 100 angeordnet, wobei eine der Umlenkrollen 48 mit einem Elektromotor **52** gekoppelt ist, durch den die Umlenkrolle 48 in Abhängigkeit von einer jeweiligen Verdrehbewegung bzw. Verdrehposition des Wickelkörpers 42 um dessen Rotationsachse 44 mit variabler Geschwindigkeit und Drehrichtung antreibbar ist. Insgesamt kann das Zugmittel 46 dadurch gegenüber dem Wickelkörper 42 in schneller Folge hin- und her bewegt werden (Changierbewegung).

Der Fadenführer 10 ist mit seinem Halteteil 12 unmittelbar an dem Zugmittel 46 befestigt, d.h. direkt an diesem axial unverschieblich festgesetzt.

Die Fadenverlegevorrichtung 100 weist zum Haltern einer mit dem Faden 40 bewickelten Vorlagenspule **54** eine Vorlagenspulenhalterung **56** auf. Die Vorlagenspulenhalterung 56 ist mit einer kombinierten Antriebs- und Bremseinheit **58** zum Antreiben der Vorlagenspule 54 um eine Vorlagenspulendrehachse **60** bzw. zum Abbremsen einer rotierenden Bewegung der Vorlagenspule 54 um die Vorlagenspulendrehachse 60 ausgestattet. Zum Abziehen des auf dem Wickelkörper 42 zu verlegenden Fadens 40 von der Vorlagenspule 54 dient ein motorisch betätigbares Lieferwerk **62**, von der der Faden 40 über eine Fadenspannungsüberwachungseinheit **64** zu einem ortsfest angeordneten Fächerpunkt **66** und von dort zu dem Fadenführer 10 geführt ist.

Eine Steuereinheit **68** dient zum Steuern/Regeln erstens des Elektromotors 52, der das Zugmittel 46 antreibt, zweitens des Motors zum rotierenden Antreiben des Wickelkörpers 42 um dessen Rotationsachse 44, drittens der Antriebs- und Bremseinheit 58 der Vorlagenspulenhalterung 56, viertens des Lieferwerks 62 und fünftens zur Kompensation der Fadenspannung. Die Steuereinheit 68 ist zudem mit der Fadenspannungsüberwachungseinheit 64 gekoppelt, so dass der Fadenzulauf an den Fadenführer 10 in Abhängigkeit von einer vorgegebenen Fadenspannung präzis steuerbar/regelbar ist.

In der Steuereinheit 68 sind mehrere Wickelprogramme für unterschiedliche Fadenverlegemuster und unterschiedliche Wickelkörper hinterlegt, die über eine an der Steuereinheit 68 angeschlossene Bedieneinheit **70** aufgerufen und ausgewählt werden können. Weiterhin können die Wickelprogramme auch frei abgeändert bzw. durch weitere Wickelprogramme erweitert bzw. ersetzt werden.

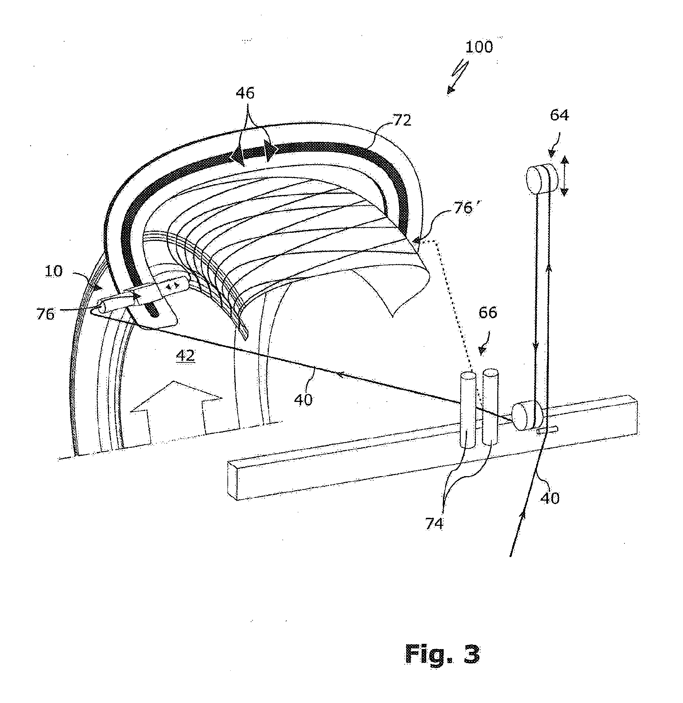

In **Fig. 3** ist die Fadenverlegevorrichtung 100 zur Verdeutlichung des Bewegungsmusters des am Zugmittel 46 festgesetzten Fadenführers 10 während des Fadenverlegeprozesses in einer perspektivischen Teilansicht wiedergegeben. Die Zugmittel 46 sind durch Pfeile symbolisiert und zeigen auf, dass der Fadenführer entlang einer Kurvenbahn 72 hin- und herbewegbar ist. Gut zu erkennen ist in der Figur, wie das Zugmittel 46 den Fadenführer 10 auf Kurvenbahn **72** mittels einer changierenden Bewegung des Zugmittels 46 gegenüber dem Wickelkörper 42 hin- und her bewegen kann. Der vorstehend erläuterte Fächerpunkt 66, von dem der Faden 40 dem Fadenführer 10 (frei) zuführbar ist, weist zwei voneinander beabstandet und zueinander parallel angeordnete starre Führungsstäbe **74** auf. Die Führungsstäbe 74 können nach einem weiteren nicht gezeigten Ausführungsbeispiel der Erfindung auch entlang ihrer Längsachse drehbar gelagert sein, um eine Reibung des Fadens an den Führungsstäben 74 zu minimieren. Der Fächerpunkt 66 weist von einander gegenüberliegenden Endpunkten **76, 76'** der Kurvenbahn 72, d.h. von Bewegungsrichtungsumkehrpunkten einer Bewegung des Fadenführers 10 entlang der Kurvenbahn 72, einen gleichen Abstand auf. Dadurch ist die aktive Länge des Fadens 40 zwischen dem Fächerpunkt 66 und dem Fadenführer 10 während des Fadenverlegeprozesses im Wesentlichen (nahezu) konstant.

Zum Verlegen des Fadens 40 auf dem Wickelkörper 42 wird zunächst über die Bedieneinheit 70 der Fadenverlegevorrichtung 100 ein auf den Wickelkörper 42 abgestimmtes Wickelprogramm für die gewünschte Wickelung des Fadens 40 auf dem Wickelkörper 42 aufgerufen und ausgewählt. Der Wickel- bzw. Fadenverlegeprozess wird nach dem Anfahren einer Startposition des Fadenführers 10 relativ zum Wickelkörper 42 gestartet. Der Fadenführer 10 wird mittels des durch den Elektromotor 52 angetriebenen Zugmittels 46 nach vorgegebenen Parametern (Beschleunigung, Geschwindigkeit, Wegstrecke) des Fadenführers 10 sowie des dazu synchonisiert bewegten Wickelkörpers 42 entlang der Kurvenbahn 72 hin- und herbewegt. Dabei wird der Faden 40 mit einer über die Fadenspannungsüberwachungseinrichtung 64 eingestellten Fadenspannung auf dem Wickelkörper 42 verlegt. Der Faden 40 wird stets in Bewegungsrichtung des Fadenführers 10 gegenüber dem Wickelkörper 42 vor der Fadenführungsrolle 36 aus dem Fadenauslass 34 des Fadenführers 10 herausgeführt und unter Führung an der Fadenführungsrolle 36 in Richtung auf den Wickelkörper 42 gelenkt. Die Fadenführungsrolle 36 rollt dabei stets über dem Faden 40 auf dem Wickelkörper 42 ab und drückt dabei den Faden 40 mit gleichbleibendem Druck an dem Wickelkörper 42 an. Die Bewegungsrichtung des Fadenführers 10 gegenüber dem Wickelkörper 42 ändert sich im Bereich der Endpunkte 76, 76' der Kurvenbahn abrupt. Dadurch richtet sich die als Selbstlenkrolle ausgebildete Fadenführungsrolle 36 selbsttätig entlang der neuen Bewegungsrichtung in Richtung auf den jeweilig gegenüberliegenden Endpunkt 76, 76' der Kurvenbahn 72 aus. Als Faden 40 kann auch ein selbstklebendes Garn (beschichtet) eingesetzt werden und/oder der Faden 40 wird auf einer klebenden Ummantelung verlegt (z.B. teilvulkanisierter Gummi, Kautschuk).

Unterstützend kann auf den Fadenführerkopf 14 zusätzlich ein um dessen Drehachse 18 wirkendes (gesteuertes) Drehmoment ausgeübt werden. Dieses Drehmoment kann erfindungsgemäß pneumatisch, durch die Kraft eines vorgespannten Federelements (nicht gezeigt) oder durch einen nicht näher gezeigten Motor aufgebracht werden. Die zeitliche Koordination des Drehmoments mit dem Erreichen des Umkehrpunkts kann mechanisch oder aber elektronisch, z.B. durch die Steuereinheit 68, erfolgen.

## Patentansprüche

1. Fadenverlegevorrichtung (100) zum Verlegen eines Fadens (40) auf einem Wickelkörper (42), mit einem Fadenführer (10), der in Abhängigkeit von einer Bewegung des Wickelkörpers (42) entlang einer durch Führungsmittel definierten Kurvenbahn (72) frei wählbar hin- und her bewegbar ist, wobei
der Fadenführer (10) eine Fadenführungsrolle (36) zum Führen und Andrücken des Fadens gegen den Wickelkörper (42) umfasst, die um eine Fadenführungsrollendrehachse (38) verdrehbar gelagert ist, wobei die Fadenführungsrolle (36) an einem Fadenführerkopf (14) angeordnet ist, der an einem Halteteil des Fadenführers (10) um eine Drehachse (18) verschwenkbar angelenkt ist, wobei
die Fadenführungsrollendrehachse (38) der Fadenführungsrolle (36) von der Drehachse (18) des Fadenführerkopfs (14) beabstandet angeordnet ist wobei
die Fadenführungsrolle (36) als Selbstlenkrolle ausgebildet ist und wobei der Fadenführerkopf (14) am Halteteil (12) des Fadenführers (10) verschiebbar gelagert ist,
**dadurch gekennzeichnet, dass**
die Führungsmittel ein über Umlenkrollen (48) und/oder Umlenkstäbe hin-und herbewegbar geführtes flexibel verformbares Zugmittel (46) umfassen, an dem der Fadenführer (10) unmittelbar befestigt ist und mit dem der Fadenführer gemeinsam auf derselben Kurvenbahn hin- und herbewegbar ist und wobei der Fadenführer (10) über die Kurvenbahn (72) gegenüber einer Ausgangsorientierung des Fadenführers (10) in einer jeweiligen Raumebene zwischen 7° und 348° hin- und her bewegbar ist.

2. Fadenverlegevorrichtung (100) nach Anspruch 1, **dadurch gekennzeichnet, dass** der Fadenführerkopf (14), vorzugsweise pneumatisch, mit einem um seine Drehachse (18) wirkenden Drehmoment beaufschlagbar ist, um eine Selbstausrichtung des Fadenführers (10) im Bereich der Fadenführungsrolle (36) einzuleiten.

## Claims

1. Thread displacement device (100) for displacing a thread (40) on a winding body (42), with a thread guide (10), which, depending on a movement of the winding body (42), can be freely selectively moved back and forth along a curved path (72) defined by guide means, wherein
the thread guide (10) has a thread guide roller (36) rotatably mounted about a thread guide roller rotational axis (38) to guide and press the thread against the winding body (42), wherein the thread guide roller (36) is arranged on a thread guide head (14) which is pivotably articulated about a rotational axis (18) to a holding part (12) of the thread guide (10), wherein
the thread guide roller rotational axis (38) of the thread guide roller (36) is arranged spaced apart from the rotational axis (18) of the thread guide head (14),
wherein
the thread guide roller (36) is configured as a self-directing roller and wherein the thread guide head (14) is displaceably mounted on the holding part (12) of the thread guide (10),
**characterized in that**
the guide means comprise a flexibly deformable traction means (46), which is guided so as to be movable back and forth by means of deflection rollers (48) and/or deflection rods, on which the thread guide (10) is directly fastened, and together with which the thread guide can move back and forth on the same curved path, and wherein the thread guide (10) can be moved back and forth on a respective spatial plane between 7° and 348° relative to a starting orientation of the thread guide (10) via the curved path (72).

2. Thread displacement device (100) according to claim 1, **characterized in that** the thread guide head (14) can be loaded, preferably pneumatically, with a torque acting about its rotational axis (18), in order to initiate a self-orientation of the thread guide (10) in the region of the thread guide roller (36).

## Revendications

1. Dispositif (100) de pose de fil servant à poser un fil (40) sur un corps d'enroulement (42), avec un guide-fil (10) qui, en fonction d'un déplacement du corps d'enroulement (42), peut être déplacé en va-et-vient de manière librement choisie le long d'une trajectoire incurvée (72) définie par des moyens de guidage,
sachant que le guide-fil (10) comprend un galet (36) de guidage de fil monté rotatif autour d'un axe de rotation (38) de galet de guidage de fil et servant à guider le fil et le presser contre le corps d'enroulement (42), le galet (36) de guidage de fil étant disposé sur une tête de guide-fil (14) qui est articulée à pivotement autour d'un axe de rotation (18) sur une partie de maintien du guide-fil (10),
sachant que l'axe de rotation (38) du galet (36) de guidage de fil est disposé à distance de l'axe de rotation (18) de la tête de guide-fil (14),
sachant que le galet (36) de guidage de fil est réalisé sous la forme d'un galet autodirecteur et sachant que la tête de guide-fil (14) est montée à translation sur la partie de maintien (12) du guide-fil (10),
**caractérisé en ce que** les moyens de guidage comprennent un moyen de traction (46) déformable élastiquement et guidé en va-et-vient via des rouleaux de renvoi (48) et/ou des barres de renvoi, moyen auquel le guide-fil (10) est directement fixé et avec lequel le guide-fil peut être conjointement déplacé en va-et-vient sur la même trajectoire incurvée, sachant que le guide-fil (10) peut être déplacé en va-et-vient sur la trajectoire incurvée (72), par rapport à une orientation initiale du guide-fil (10), entre 7° et 348° dans un plan spatial respectif.

2. Dispositif (100) de pose de fil selon la revendication 1, **caractérisé en ce que** la tête de guide-fil (14) peut être sollicitée, de préférence pneumatiquement, par un couple de rotation agissant autour de son axe de rotation (18), afin de déclencher un auto-alignement du guide-fil (10) dans la région du galet (36) de guidage de fil.
